# EUROPÄISCHE PATENTSCHRIFT

(11) **EP 3 375 077 B1**
(45) Veröffentlichungstag und Bekanntmachung des Hinweises auf die Patenterteilung: **12.10.2022**
(21) Anmeldenummer: 16788682.9
(22) Anmeldetag: 28.10.2016
(51) Int. Cl.: H02K 11/33, H02K 11/21, B62D 5/04

(54) **ELEKTROMECHANISCHER STELLANTRIEB MIT REDUNDANTEM ELEKTRONISCHEN TEILSYSTEM**
ELECTROMECHANICAL ACTUATOR COMPRISING A REDUNDANT ELECTRONIC SUB-SYSTEM
MÉCANISME DE COMMANDE ÉLECTROMÉCANIQUE AVEC SOUS-SYSTÈME ÉLECTRONIQUE REDONDANT

(30) Priorität: 11.11.2015 DE 102015222266
(43) Veröffentlichungstag der Anmeldung: 19.09.2018
(73) Patentinhaber: Robert Bosch GmbH, 70442 Stuttgart (DE); Robert Bosch Automotive Steering GmbH, 73527 Schwäbisch Gmünd (DE)
(72) Erfinder: HUDELMAIER, Gebhard, 73563 Mögglingen (DE); SWOROWSKI, Eugen, 73547 Lorch (DE); HESSLER, Thomas, 72805 Lichtenstein (DE); MUELLER, Hans-Peter, 72766 Reutlingen (DE); WIEDEMANN, Sylvia, 71640 Ludwigsburg (DE)
(86) Internationale Anmeldenummer: PCT/EP2016/076054
(87) Internationale Veröffentlichungsnummer: WO 2017/080848

(56) Entgegenhaltungen:
- EP-A1- 2 244 359
- DE-A1-102006 056 855
- DE-A1-102011 007 147
- DE-A1-102012 101 006

## Beschreibung

### Stand der Technik

Die Erfindung geht aus von einem elektromechanischen Stellantrieb zur Zahnstangenlenkung, wobei der Stellantrieb einen Stator und einen Rotor aufweist. Des Weiteren weist der Stellantrieb ein elektronisches System auf, welches wenigstens ein erstes elektronisches Teilsystem mit einer ersten Leistungsendstufe, einer ersten Steuerungseinheit und einer ersten Rotorlagensensoranordnung und ein zweites elektronisches Teilsystem mit einer zweiten Leistungsendstufe, einer zweiten Steuerungseinheit und einer zweiten Rotorlagensensoranordnung aufweist. Hierbei stehen das erste elektronische Teilsystem und das zweite elektronische Teilsystem gemeinsam mit dem Stator und dem Rotor in Wirkzusammenhang.

Solch ein elektromechanischer Stellantrieb ist beispielsweise in der Offenlegungsschrift DE 10 2006 056 855 A1 offenbart.

### Offenbarung der Erfindung

Die Erfindung geht aus von einem elektromechanischen Stellantrieb zur Zahnstangenlenkung, wobei der Stellantrieb einen Stator und einen Rotor aufweist. Des Weiteren weist der Stellantrieb ein elektronisches System auf, welches wenigstens ein erstes elektronisches Teilsystem mit einer ersten Leistungsendstufe, einer ersten Steuerungseinheit und einer ersten Rotorlagensensoranordnung und ein zweites elektronisches Teilsystem mit einer zweiten Leistungsendstufe, einer zweiten Steuerungseinheit und einer zweiten Rotorlagensensoranordnung aufweist. Hierbei stehen das erste elektronische Teilsystem und das zweite elektronische Teilsystem gemeinsam mit dem Stator und dem Rotor in Wirkzusammenhang. Der Kern der Erfindung besteht darin, dass das erste elektronische Teilsystem wenigstens auf einer ersten Schaltungsträgerebene und einer zweiten Schaltungsträgerebene und das zweite elektronische Teilsystem wenigstens auf der ersten Schaltungsträgerebene und einer dritten Schaltungsträgerebene angeordnet sind. Des Weiteren sind die erste, zweite und dritte Schaltungsträgerebene senkrecht zu einer Drehachse des Rotors und entlang der Drehachse voneinander beabstandet angeordnet. Vorteilhaft ist hierbei, dass bei Ausfall eines der beiden elektronischen Teilsysteme der Stellantrieb auch weiterhin ein bestimmtes Moment liefern kann. Durch dieses bestimmte Moment können sicherheitskritische Fahrmanöver weiterhin ausgeführt werden. Komfortfunktionen, wie beispielsweise eine Einparkhilfe, werden jedoch nicht mehr unbedingt komplett unterstützt. Durch die aufgeteilte Anordnung der elektronischen Teilsysteme auf unterschiedliche Schaltungsträgerebenen wird weiterhin erreicht, dass die Ursache für den Ausfall eines elektronischen Teilsystems vorzugsweise nicht zum Ausfall des anderen elektronischen Teilsystems führt. Zudem kann durch die Anordnung der elektronischen Teilsysteme auf mehreren Schaltungsträgerebenen der Stellantrieb in seinem Durchmesser gering gehalten werden, was insbesondere für eine achsparallele Anordnung von Zahnstange und Stellantrieb von Vorteil ist, bei welchem in radialer Richtung nur begrenzt Bauraum zur Verfügung steht.

Eine vorteilhafte Ausgestaltung der Erfindung sieht vor, dass auf der ersten Schaltungsträgerebene die erste Leistungsendstufe, die zweite Leistungsendstufe, die erste Rotorlagensensoranordnung sowie die zweite Rotorlagensensoranordnung, auf der zweiten Schaltungsträgerebene die erste Steuerungseinheit und auf der dritten Schaltungsträgerebene die zweite Steuerungseinheit angeordnet sind.

Vorteilhaft ist hierbei, dass die Steuerungseinheiten auf unterschiedlichen Schaltungsträgerebenen angeordnet sind, da insbesondere diese sehr empfindlich sind und ein erhöhtes Ausfallrisiko aufweisen. Zudem ist es von Vorteil die Leistungsendstufen getrennt von den Steuerungseinheiten anzuordnen, da die Leistungsendstufen eine elektromagnetische Strahlung aufweisen, welche die Steuerungseinheiten negativ beeinflussen könnte. Hierdurch kann somit die EMV des Systems erhöht werden.

Eine weitere vorteilhafte Ausgestaltung der Erfindung sieht vor, dass die erste Steuerungseinheit und die zweite Steuerungseinheit auf sich zugewandten Seiten der zweiten Schaltungsträgerebene und der dritten Schaltungsträgerebene angeordnet sind.

Vorteilhaft ist hierbei, dass die Wärmeentwicklung der beiden Steuerungseinheiten durch die Anordnung auf sich zugewandten Seiten beispielsweise durch einen gemeinsamen Kühlkörper, welcher dazwischen angeordnet ist, abtransportiert werden kann.

Gemäß einer vorteilhaften Ausgestaltung der Erfindung ist vorgesehen, dass die erste Schaltungsträgerebene einen geringeren Abstand als die übrigen Schaltungsträgerebenen zum Rotor aufweist.

Vorteilhaft ist hierbei, dass zum Einen die Leistungsendstufen nah am Motorkontakt angeordnet sind, wodurch die EMV verbessert wird, da Störkopplungen aufgrund parallel geführter Leitungen der Leistungsendstufen gering gehalten werden. Zum Anderen sind auch die Rotorlagensensoranordnungen in der Nähe des Rotors angeordnet, um eine möglichst hohe Signalgüte bei der Messung der Rotorlage zu erzielen, welche nicht durch andere Schaltungsträgerebenen, welche zwischen den Rotorlagensensoranordnungen und dem Rotor angeordnet sind, vermindert wird.

Gemäß einer weiteren vorteilhaften Ausgestaltung der Erfindung ist vorgesehen, dass das erste elektronische Teilsystem einen ersten Spannungszwischenkreis und das zweite elektronische Teilsystem einen zweiten Spannungszwischenkreis aufweist, wobei der erste Spannungszwischenkreis und der zweite Spannungszwischenkreis auf der ersten Schaltungsträgerebene angeordnet sind. Des Weiteren weisen der erste Spannungszwischenkreis wenigstens einen ersten Kondensator und der zweite Spannungszwischenkreis wenigstens einen zweiten Kondensator aufweist.

Vorteilhaft ist hierbei, dass durch die Anordnung der Spannungszwischenkreise auf der ersten Schaltungsträgerebene die EMV des System weiter verbessert wird, da die Länge der Leitungen zu den Leistungsendstufen möglichst gering gehalten wird und diese Leitungen somit eine geringe Impedanz aufweisen.

In einer vorteilhaften Ausführungsform ist vorgesehen, dass das erste elektronische Teilsystem eine erste EMV-Bauteilgruppe und das zweite elektronische Teilsystem eine zweite EMV-Bauteilgruppe aufweist, welche auf einer vierten Schaltungsträgerebene angeordnet sind. Hierbei ist die vierte Schaltungsträgerebene senkrecht zur Drehachse des Rotors und entlang der Drehachse von der ersten Schaltungsträgerebene, der zweiten Schaltungsträgerebene und der dritten Schaltungsträgerebene beabstandet angeordnet.

Vorteilhaft ist hierbei, dass durch die Anordnung der EMV-Bauteilgruppen auf der vierten Schaltungsträgerebene der radial benötigte Bauraum des Stellantriebs gering bleibt. Dies liegt darin begründet, dass die EMV-Bauteilgruppen viel Platz benötigen. Würde man diese EMV-Bauteilgruppen nun auf einer der anderen drei Schaltungsträgerebenen anordnen, müssten diese Schaltungsträgerebene in ihrer horizontalen Ausdehnung vergrößert werden, um die EMV-Bauteilgruppen aufnehmen zu können. Dies würde jedoch zu einer radialen Ausdehnung des Stellantriebs führen, was bei einer achsparallelen Anordnung von Zahnstange und Stellantrieb von Nachteil wäre.

In einer weiteren vorteilhaften Ausführungsform ist vorgesehen, dass die erste Rotorlagensensoranordnung einen ersten AMR-Sensor, einen ersten Hall-Sensor und einen zweiten Hall-Sensor und die zweite Rotorlagensensoranordnung einen zweiten AMR-Sensor, einen dritten Hall-Sensor und einen vierten Hall-Sensor aufweist, wobei der erste AMR-Sensor und der zweite AMR-Sensor zentrisch zur Drehachse des Rotors auf der ersten Schaltungsträgerebene angeordnet sind, und wobei der erste Hall-Sensor, der zweite Hall-Sensor, der dritte Hall-Sensor und der vierte Hall-Sensor konzentrisch zur Drehachse des Rotors auf der ersten Schaltungsträgerebene angeordnet sind, wobei der erste Hall-Sensor zum zweiten Hall-Sensor ebenso wie der dritte Hall-Sensor zum vierten Hallsensor bezogen auf die Drehachse des Rotors um einen Winkel von 90° zueinander versetzt angeordnet sind.

Vorteilhaft ist hierbei, dass durch die zentrale Anordnung der AMR-Sensoren und durch die konzentrische Anordnung der Hall-Sensoren zur Drehachse des Rotors eine möglichst genaue Messung der Rotorlage erreicht werden kann.

Gemäß einer vorteilhaften Ausgestaltung der Erfindung ist vorgesehen, dass der erste Hall-Sensor, der zweite Hall-Sensor, der dritte Hall-Sensor und der vierte Hall-Sensor auf einer vom Rotor abgewandten Seite der ersten Schaltungsträgerebene angeordnet sind.

Vorteilhaft ist hierbei, dass durch die Anordnung der Hall-Sensoren auf der vom Rotor abgewandten Seite der ersten Schaltungsträgerebene der Abstand zwischen Rotor und Hall-Sensoren durch die Dicke der ersten Schaltungsträgerebene derart eingestellt werden kann, dass eine verbesserte Signalgüte zur Rotorlagenbestimmung erzielt werden kann.

Gemäß einer weiteren vorteilhaften Ausgestaltung der Erfindung ist vorgesehen, dass der erste AMR-Sensor und der zweite AMR-Sensor auf einer dem Rotor zugewandten Seite der ersten Schaltungsträgerebene angeordnet sind. Vorteilhaft ist hierbei, dass die Signalgüte der AMR-Sensoren durch die möglichst nahe Anordnung zum Rotor hin gesteigert wird.

In einer vorteilhaften Ausführungsform ist vorgesehen, dass der erste AMR-Sensor und der zweite AMR-Sensor auf voneinander abgewandten Seiten der ersten Schaltungsträgerebene angeordnet sind.

Vorteilhaft ist hierbei, dass die Anbringung der AMR-Sensoren auf der ersten Schaltungsträgerebene einfach gehalten wird, da beide AMR-Sensoren zentral zur Drehachse angeordnet werden können, ohne dass sie beispielsweise gestapelt angeordnet werden müssen.

In einer weiteren vorteilhaften Ausführungsform ist vorgesehen, dass die erste Schaltungsträgerebene in einem Bereich, auf welchem die erste Rotorlagensensoranordnung und die zweite Rotorlagensensoranordnung angeordnet sind, eine Dicke zwischen 0,8 mm und 1,6 mm aufweist.

Vorteilhaft ist hierbei, dass trotz Anordnung eines der AMR-Sensoren auf einer vom Rotor abgewandten Seite, dieser so nah zum Rotor angeordnet ist, dass ein gutes Messergebnis geliefert werden kann, jedoch die ebenfalls auf der vom Rotor abgewandten Seite angeordneten Hall-Sensoren, so weit vom Rotor entfernt angeordnet sind, um ebenfalls ein gutes Messergebnis liefern zu können.

Gemäß einer vorteilhaften Ausgestaltung der Erfindung ist vorgesehen, dass die erste Rotorlagensensoranordnung einen ersten TMR-Sensor und die zweite Rotorlagensensoranordnung einen zweiten TMR-Sensor aufweist, wobei der erste TMR-Sensor und der zweite TMR-Sensor zentrisch zur Drehachse des Rotors auf der ersten Schaltungsträgerebene angeordnet sind.

Vorteilhaft ist hierbei, dass die TMR-Sensoren für die Bestimmung der Rotorlage ausreichend sind, wodurch der Aufbau der Rotorlagensensoranordnungen vereinfacht wird.

Gemäß einer weiteren vorteilhaften Ausgestaltung der Erfindung ist vorgesehen, dass das erste elektronische Teilsystem und das zweite elektronische Teilsystem in einem gemeinsamen Gehäuse angeordnet sind.

Vorteilhaft ist hierbei, dass beide elektronischen Teilsysteme entsprechend vor äußeren Einflüssen geschützt sind, welche möglicherweise zu einem Ausfall führen könnten und zudem nur ein Gehäuse für beide elektronischen Teilsysteme nötig ist.

In einer vorteilhaften Ausführungsform ist vorgesehen, dass das Gehäuse Vorsprünge nach innen aufweist, welche wenigstens die erste Steuerungseinheit und die zweite Steuerungseinheit im Wesentlich räumlich voneinander trennen. Vorteilhaft ist hierbei, dass die Gefahr verringert wird, dass Fehlerursachen, die zum Ausfall einer der Steuerungseinheiten führen, auch zum Ausfall der anderen Steuerungseinheit führen.

In einer weiteren vorteilhaften Ausführungsform ist vorgesehen, dass das Gehäuse derart ausgestaltet ist, dass das erste elektronische Teilsystem und das zweite elektronische Teilsysteme im Wesentlichen räumlich voneinander getrennt in dem Gehäuse angeordnet sind.

Vorteilhaft ist hierbei, dass möglicherweise verhindert werden kann, dass Fehlerursachen, die zum Ausfall eines der elektronischen Teilsysteme führen, auch zum Ausfall des anderen elektronischen Teilsystems führen.

### Zeichnungen

Fig. 1 zeigt ein erstes Ausführungsbeispiel eines erfindungsgemäßen elektromechanischen Stellantriebs, welcher in einem Lenksystem angeordnet ist.
Fig. 2 zeigt eine Draufsicht einer Ausgestaltung der ersten Schaltungsträgerebene aus Fig. 1 im Detail.
Fig. 3 zeigt eine Seitenansicht einer Ausgestaltung der ersten Schaltungsträgerebene aus Fig.1 im Detail.
Fig. 4 zeigt eine detaillierte Seitenansicht eines Ausschnitts des Stellantriebs nach Fig. 1.

### Beschreibung von Ausführungsbeispielen

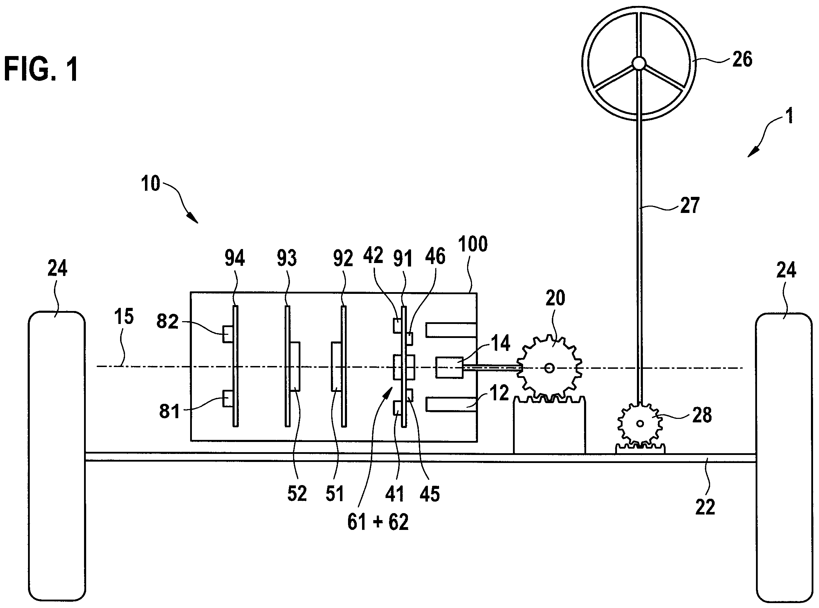

Fig. 1 zeigt ein erstes Ausführungsbeispiel eines erfindungsgemäßen elektromechanischen Stellantriebs, welcher in einem Lenksystem angeordnet ist. Dargestellt ist ein elektromechanischer Stellantrieb 10. Der Stellantrieb 10 dient zur Unterstützung eines Lenksystems 1, welches über ein Lenkrad 26, eine Lenksäule 27 und ein Lenkritzel 28 in eine Zahnstange 22 eingreift und somit Lenkbefehle von einem Fahrer an mit der Zahnstange 22 verbundene Räder 24 weitergeben kann. Der Stellantrieb 10 weist einen Stator 12 und einen Rotor 14 auf. Der Rotor 14 greift über ein Ritzel 20 auf die Zahnstange 22 ein. Des Weiteren ist der Stellantrieb 10 bzw. eine Drehachse 15 des Rotors 14 achsparallel zur Zahnstange 22 angeordnet. Der Stellantrieb 10 weist zudem ein erstes elektronisches Teilsystem und ein zweites elektronisches Teilsystem auf, welche gemeinsam ein elektronisches System des Stellantriebs 10 bilden. Das erste elektronische Teilsystem weist wiederum eine erste Leistungsendstufe 41, eine erste Steuerungseinheit 51 und eine erste Rotorlagensensoranordnung 61 auf. Das zweite elektronische Teilsystem weist eine zweite Leistungsendstufe 42, eine zweite Steuerungseinheit 52 und eine zweite Rotorlagensensoranordnung 62 auf. Vorzugsweise weist das erste elektronische Teilsystem zudem einen ersten Spannungszwischenkreis 45 und einen erste EMV-Bauteilgruppe 81 und das zweite elektronische Teilsystem einen zweiten Spannungszwischenkreis 46 und eine zweite EMV-Bauteilgruppe 82 auf. Das erste elektronische Teilsystem ist auf einer ersten Schaltungsträgerebene 91, einer zweiten Schaltungsträgerebene 92 und einer vierten Schaltungsträgerebene 94 angeordnet. Das zweite elektronische Teilsystem ist auf der ersten Schaltungsträgerebene 91, einer dritten Schaltungsträgerebene 93 und der vierten Schaltungsträgerebene 94 angeordnet. Auf der ersten Schaltungsträgerebene 91 sind die erste Leistungsendstufe 41, die zweite Leistungsendstufe 42, die erste Rotorlagensensoranordnung 61 und die zweite Rotorlagensensoranordnung 62 angeordnet. Zudem sind auf der ersten Schaltungsträgerebene 91 der erste Spannungszwischenkreis 45, welcher wenigstens einen bildlich nicht dargestellten ersten Kondensator aufweist, und der zweite Spannungszwischenkreis 46, welcher wenigstens einen bildlich nicht dargestellten zweiten Kondensator aufweist, angeordnet. Auf der zweiten Schaltungsträgerebene 92 ist die erste Steuerungseinheit 51 angeordnet. Auf der dritten Schaltungsträgerebene 93 ist die zweite Steuerungseinheit 52 angeordnet. Des Weiteren sind auf der vierten Schaltungsträgerebene 94 die erste EMV-Bauteilgruppe 81 und die zweite EMV-Bauteilgruppe 82 angeordnet. Der Stellantrieb 10 ist in einem Gehäuse 100 angeordnet.

Bildlich nicht dargestellt sind die Wicklungen des ersten elektronischen Teilsystems und des zweiten elektronischen Teilsysteme, welche gemeinsam am Stator 12 angeordnet sind, um den Rotor 14 anzutreiben.

In einem alternativen, bildlich nicht dargestellten Ausführungsbeispiel kann die vierte Schaltungsträgerebene 94 als Deckel für das Gehäuse 100 des Stellantriebs 10 dienen.

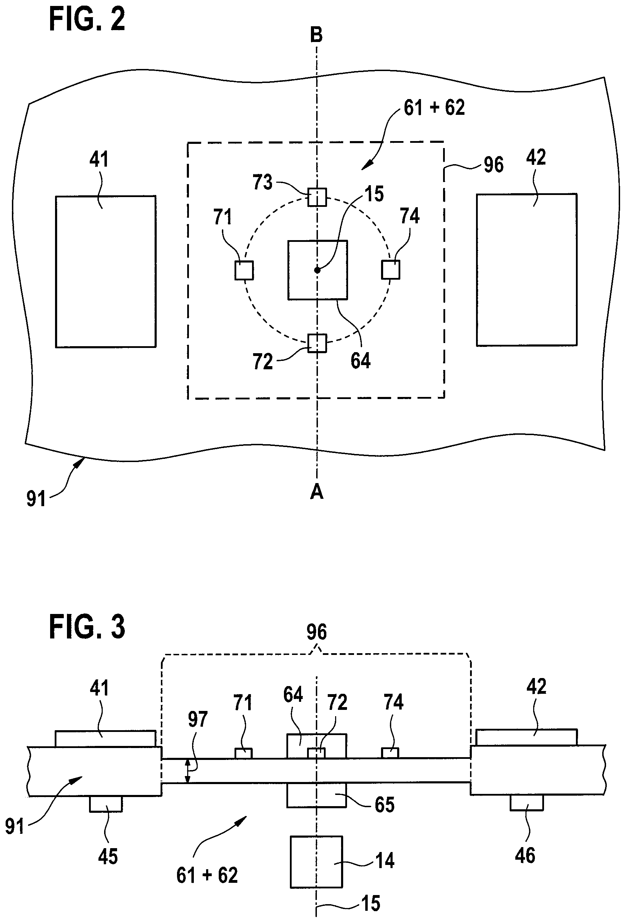

Fig. 2 zeigt eine Draufsicht einer Ausgestaltung der ersten Schaltungsträgerebene aus Fig. 1 im Detail. Dargestellt ist die erste Schaltungsträgerebene 91. Die Drehachse 15 des Rotors 14 steht senkrecht zur ersten Schaltungsträgerebene 91. In einem Bereich 96 der ersten Schaltungsträgerebene 91 sind die erste Rotorlagensensoranordnung 61 und die zweite Rotorlagensensoranordnung 62 zur berührungslosen Sensierung der Rotorlage des Rotors 14 angeordnet, wobei der Rotor 14 hierfür einen bildlich nicht dargestellten, zur Drehachse 15 hin zentrierten Gebermagneten aufweist. Die erste Rotorlagensensoranordnung 61 weist einen ersten AMR-Sensor 64, einen ersten Hall-Sensor 71 und einen zweiten Hall-Sensor 72 auf. Die zweite Rotorlagensensoranordnung 62 weist einen zweiten AMR-Sensor 65, welcher hier bildlich nicht dargestellt ist, einen dritten Hall-Sensor 73 und einen vierten Hall-Sensor 74 auf. Die erste und zweite Rotorlagensensoranordnungen 61, 62 können hierbei sowohl digital als auch analog ausgeführt sein. Auf der ersten Schaltungsträgerebene 91 ist zudem die erste Leistungsendstufe 41 und die zweite Leistungsendstufe 42 angeordnet, jedoch außerhalb des Bereichs 96. Der erste AMR-Sensor 64 ist zentrisch zur Drehachse 15 des Rotors 14 angeordnet. Der zweite AMR-Sensor 65 ist ebenfalls zentrisch zur Drehachse 15 des Rotors 14 angeordnet, jedoch entweder vom ersten AMR-Sensor 64 verdeckt oder auf der anderen Seite der ersten Schaltungsträgerebene 91, und somit hier nicht sichtbar. Der erste Hall-Sensor 71, der zweite Hall-Sensor 72, der dritte Hall-Sensor 73 und der vierte Hall-Sensor 74 sind konzentrisch zur Drehachse 15 des Rotors 14 angeordnet. Hierbei ist der erste Hall-Sensor 71 um einen Winkel von 90° bezogen auf die Drehachse 15 des Rotors 14 versetzt zum zweiten Hall-Sensor 72 angeordnet. Ebenso ist der dritte Hall-Sensor 73 um einen Winkel von 90° bezogen auf die Drehachse 15 des Rotors 14 versetzt zum vierten Hall-Sensor 74 angeordnet.

Die erste Rotorlagensensoranordnung 61 und die zweite Rotorlagensensoranordnung 62 sind beispielsweise gemeinsam auf einem bildlich nicht dargestellten Schaltungsträger angeordnet, welcher im Bereich 96 einen Teil der ersten Schaltungsträgerebene 91 darstellt. Ebenso sind die erste Leistungsendstufe 41 sowie die zweite Leistungsendstufe 42 beispielsweise auf separaten, nicht dargestellten Schaltungsträgern angeordnet, welche beispielsweise als Direct-Bonded-Copper-Substrate ausgestaltet sein können und weitere Teile der ersten Schaltungsträgerebene 91 darstellen.

In einem alternativen, bildlich nicht dargestellten Ausführungsbeispiel können der erste Hall-Sensor 71 und der zweite Hall-Sensor 72 oder auch der dritte Hall-Sensor 73 und der vierte Hall-Sensor 74, unter Beibehalt des jeweiligen 90° Winkels zwischen dem ersten und zweiten Hall-Sensor 71, 72 bzw. zwischen dem dritten und vierten Hall-Sensor 73, 74 und unter Beibehalt der konzentrischen Anordnung zur Drehachse 15 des Rotors 14, auf der ersten Schaltungsträgerebene 91 im Bereich 96 beliebig angeordnet sein.

Fig. 3 zeigt eine Seitenansicht einer Ausgestaltung der ersten Schaltungsträgerebene aus Fig. 1 im Detail, wobei die Blickrichtung von Punkt A zum Punkt B nach Fig. 2 ist. Dargestellt ist die erste Schaltungsträgerebene 91.

Die Drehachse 15 des Rotors 14 steht senkrecht zur ersten Schaltungsträgerebene 91. Auf einer dem Rotor 14 abgewandten Seite der ersten Schaltungsträgerebene 91 ist ein erster AMR-Sensor 64 und auf einer dem Rotor 14 zugewandten Seite der ersten Schaltungsträgerebene 91 ist ein zweiter AMR-Sensor 65 angeordnet. Der erste AMR-Sensor 64 und der zweite AMR-Sensor 65 sind hierbei zentrisch zur Drehachse 15 des Rotors 14 angeordnet. Des Weiteren sind ein erster Hall Sensor 71, ein zweiter Hall-Sensor 72, ein dritter Hall-Sensor 73, welcher bildlich nicht dargestellt ist, und ein vierter Hall-Sensor 74 auf der dem Rotor 14 abgewandten Seite der Schaltungsträgerebene 91 angeordnet. Der erste AMR-Sensor 64, der erste Hall-Sensor 71 und der zweite Hall-Sensor 72 bilden hierbei die erste Rotorlagensensoranordnung 61. Der zweite AMR-Sensor 65, der dritte Hall-Sensor 73, welcher bei diesem Blickwinkel von dem ersten AMR-Sensor 64 verdeckt wird, und der vierte Hall-Sensor 74 bilden die zweite Rotorlagensensoranordnung 62. Die erste Rotorlagensensoranordnung 61 und die zweite Rotorlagensensoranordnung 62 sind auf der ersten Schaltungsträgerebene 91 in einem Bereich 96 angeordnet. In diesem Bereich 96 weist die erste Schaltungsträgerebene 91 eine bestimmte Dicke 97 auf, welche vorzugsweise zwischen 0,8 mm und 1,6 mm liegt.

In einem alternativen, bildlich nicht dargestellten Ausführungsbeispiel können der erste AMR-Sensor 64 und der zweite AMR-Sensor 65 auch gemeinsam auf der dem Rotor 14 zugewandten Seite der ersten Schaltungsträgerebene 91 angeordnet sein. Um hierbei die konzentrische Anordnung des ersten und zweiten AMR-Sensors 64, 65 zur Drehachse 15 des Rotors 14 beizubehalten, müssen diese allerdings gestapelt angeordnet werden.

In einem weiteren alternativen, bildlich nicht dargestellten Ausführungsbeispiel können der erste und der zweite Hall-Sensor 71 und 72 oder auch der dritte und der vierte Hall-Sensor 73 und 74 auf der dem Rotor 14 zugewandten Seite der ersten Schaltungsträgerebene 91 angeordnet sein.

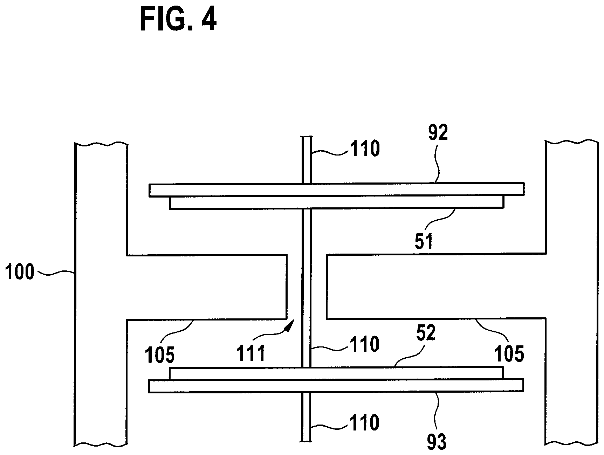

Fig. 4 zeigt eine detaillierte Seitenansicht eines Ausschnitts des Stellantriebs nach Fig. 1. Dargestellt ist ein Teil eines Gehäuses 100 des Stellantriebs 10, in welchem die zweite Schaltungsträgerebene 92 und die dritte Schaltungsträgerebene 93 angeordnet sind. Auf der zweiten Schaltungsträgerebene 92 ist die erste Steuerungseinheit 51 und auf der dritten Schaltungsträgerebene 93 ist die zweite Steuerungseinheit 52 angeordnet. Die erste Steuerungseinheit 51 und die zweite Steuerungseinheit 52 sind durch Vorsprünge 105 des Gehäuses 100 im Wesentlichen räumlich voneinander getrennt. Diese Vorsprünge 105 können beispielsweise auch als Kühlkörper ausgestaltet sein, um durch Verlustleistung generierte Wärme aus dem Stellantrieb 10 nach außen zu führen. Die Vorsprünge 105 weisen lediglich wenigstens eine Aussparung 111 auf, durch welche eine Signal- oder auch Stromführung 110 zwischen der zweiten Schaltungsträgerebene 92 und der dritten Schaltungsträgerebene 93 geführt ist. Anschlüsse für die Signal- oder auch Stromführung 110 können beispielsweise mittels Steckverbinder oder auch Einpress-Pins realisiert werden.

In einem alternativen, bildlich nicht dargestellten Ausführungsbeispiel können solche Vorsprünge 105 des Gehäuses 100 mit entsprechenden Aussparungen 111 für die Signal- oder auch Stromführung 110 zwischen anderen oder auch allen Schaltungsträgerebenen 91, 92, 93 und 94 vorhanden sein.

## Patentansprüche

1. Elektromechanischer Stellantrieb (10) zur Zahnstangenlenkung, wobei der Stellantrieb (10) einen Stator (12) und einen Rotor (14) aufweist, und wobei der Stellantrieb (10) ein elektronisches System aufweist, wobei das elektronische System wenigstens ein erstes elektronisches Teilsystem mit einer ersten Leistungsendstufe (41), einer ersten Steuerungseinheit (51) und einer ersten Rotorlagensensoranordnung (61) und ein zweites elektronisches Teilsystem mit einer zweiten Leistungsendstufe (42), einer zweiten Steuerungseinheit (52) und einer zweiten Rotorlagensensoranordnung (62) aufweist, wobei das erste elektronische Teilsystem und das zweite elektronische Teilsystem gemeinsam mit dem Stator (12) und dem Rotor (14) in Wirkzusammenhang stehen,
**dadurch gekennzeichnet, dass**
das erste elektronische Teilsystem wenigstens auf einer ersten Schaltungsträgerebene (91) und einer zweiten Schaltungsträgerebene (92) und das zweite elektronische Teilsystem wenigstens auf der ersten Schaltungsträgerebene (91) und einer dritte Schaltungsträgerebene (93) angeordnet sind, wobei die erste, zweite und dritte Schaltungsträgerebene (91, 92, 93) senkrecht zu einer Drehachse (15) des Rotors (14) und entlang der Drehachse (15) voneinander beabstandet angeordneten sind, wobei auf der ersten Schaltungsträgerebene (91) die erste Leistungsendstufe (41), die zweite Leistungsendstufe (42), die erste Rotorlagensensoranordnung (61) sowie die zweite Rotorlagensensoranordnung (62), auf der zweiten Schaltungsträgerebene (92) die erste Steuerungseinheit (51) und auf der dritten Schaltungsträgerebene (93) die zweite Steuerungseinheit (52) angeordnet sind.

2. Elektromechanischer Stellantrieb (10) nach Anspruch 1, **dadurch gekennzeichnet, dass** die erste Steuerungseinheit (51) und die zweite Steuerungseinheit (52) auf sich zugewandten Seiten der zweiten Schaltungsträgerebene (92) und der dritten Schaltungsträgerebene (93) angeordnet sind.

3. Elektromechanischer Stellantrieb (10) nach einem der Ansprüche 1 oder 2, **dadurch gekennzeichnet, dass** die erste Schaltungsträgerebene (91) einen geringeren Abstand als die übrigen Schaltungsträgerebenen (92, 93) zum Rotor (14) aufweist.

4. Elektromechanischer Stellantrieb (10) nach einem der Ansprüche 1 bis 3, **dadurch gekennzeichnet, dass** das erste elektronische Teilsystem einen ersten Spannungszwischenkreis (45) und das zweite elektronische Teilsystem einen zweiten Spannungszwischenkreis (46) aufweist, wobei der erste Spannungszwischenkreis (45) und der zweite Spannungszwischenkreis (46) auf der ersten Schaltungsträgerebene (91) angeordnet sind, und wobei der erste Spannungszwischenkreis (45) wenigstens einen ersten Kondensator und der zweite Spannungszwischenkreis (46) wenigstens einen zweiten Kondensator aufweist.

5. Elektromechanischer Stellantrieb (10) nach einem der Ansprüche 1 bis 4, **dadurch gekennzeichnet, dass** das erste elektronische Teilsystem eine erste EMV-Bauteilgruppe (81) und das zweite elektrische Teilsystem eine zweite EMV-Bauteilgruppe (82) aufweist, welche auf einer vierten Schaltungsträgerebene (94) angeordnet sind, wobei die vierte Schaltungsträgerebene (94) senkrecht zur Drehachse (15) des Rotors (14) und entlang der Drehachse (15) von der ersten Schaltungsträgerebene (91), zweiten Schaltungsträgerebene (92) und dritten Schaltungsträgerebene (93) beabstandet angeordnet ist.

6. Elektromechanischer Stellantrieb (10) nach einem der Ansprüche 1 bis 5, **dadurch gekennzeichnet, dass** die erste Rotorlagensensoranordnung (61) einen ersten AMR-Sensor (64), einen ersten Hall-Sensor (71) und einen zweiten Hall-Sensor (72) und die zweite Rotorlagensensoranordnung (62) einen zweiten AMR-Sensor (65), einen dritten Hall-Sensor (73) und einen vierten Hall-Sensor (74) aufweist, wobei der erste AMR-Sensor (64) und der zweite AMR-Sensor (65) zentrisch zur Drehachse (15) des Rotors (14) auf der ersten Schaltungsträgerebene (91) angeordnet sind, und wobei der erste Hall-Sensor (71), der zweite Hall-Sensor (72), der dritte Hall-Sensor (73) und der vierte Hall-Sensor (74) konzentrisch zur Drehachse (15) des Rotors (14) auf der ersten Schaltungsträgerebene (91) angeordnet sind, wobei der erste Hall-Sensor (71) zum zweiten Hall-Sensor (72) ebenso wie der dritte Hall-Sensor (73) zum vierten Hallsensor (74) um einen Winkel von 90° um die Drehachse (15) des Rotors (14) herum zueinander versetzt angeordnet sind.

7. Elektromechanischer Stellantrieb (10) nach Anspruch 6, **dadurch gekennzeichnet, dass** der erste Hall-Sensor (71), der zweite Hall-Sensor (72), der dritte Hall-Sensor (73) und der vierte Hall-Sensor (74) auf einer vom Rotor (14) abgewandten Seite der ersten Schaltungsträgerebene (91) angeordnet sind.

8. Elektromechanischer Stellantrieb (10) nach einem der Ansprüche 6 oder 7, **dadurch gekennzeichnet, dass** der erste AMR-Sensor (64) und der zweite AMR-Sensor (65) auf einer dem Rotor (14) zugewandten Seite der ersten Schaltungsträgerebene (91) angeordnet sind.

9. Elektromechanischer Stellantrieb (10) nach einem der Ansprüche 6 oder 7, **dadurch gekennzeichnet, dass** der erste AMR-Sensor (64) und der zweite AMR-Sensor (65) auf voneinander abgewandten Seiten der ersten Schaltungsträgerebene (91) angeordnet sind.

10. Elektromechanischer Stellantrieb (10) nach Anspruch 9, **dadurch gekennzeichnet, dass** die erste Schaltungsträgerebene (91) in einem Bereich (96), auf welchem die erste Rotorlagensensoranordnung (61) und die zweite Rotorlagensensoranordnung (62) angeordnet sind, eine Dicke (97) zwischen 0,8mm und 1,6mm aufweist.

11. Elektromechanischer Stellantrieb (10) nach einem der Ansprüche 1 bis 5, **dadurch gekennzeichnet, dass** die erste Rotorlagensensoranordnung (61) einen ersten TMR-Sensor (67) und die zweite Rotorlagensensoranordnung (62) einen zweiten TMR-Sensor (68) aufweist, wobei der erste TMR-Sensor (67) und der zweite TMR-Sensor (68) zentrisch zur Drehachse (15) des Rotors (14) auf der ersten Schaltungsträgerebene (91) angeordnet sind.

12. Elektromechanischer Stellantrieb (10) nach einem der Ansprüche 1 bis 11, **dadurch gekennzeichnet, dass** das erste elektronische Teilsystem und das zweite elektronische Teilsystem in einem gemeinsamen Gehäuse (100) angeordnet sind.

13. Elektromechanischer Stellantrieb (10) nach Anspruch 12, **dadurch gekennzeichnet, dass** das Gehäuse (100) Vorsprünge (105) nach innen aufweist, welche wenigstens die erste Steuerungseinheit (51) und die zweite Steuerungseinheit (52) im Wesentlichen räumlich voneinander trennen.

14. Elektromechanischer Stellantrieb (10) nach Anspruch 12 oder 13, **dadurch gekennzeichnet, dass** das Gehäuse (100) derart ausgestaltet ist, dass das erste elektronische Teilsystem und das zweite elektronische Teilsysteme im Wesentlichen räumlich voneinander getrennt im Gehäuse (100) angeordnet sind.

## Claims

1. Electromechanical actuating drive (10) for rack-and-pinion steering, wherein the actuating drive (10) has a stator (12) and a rotor (14), and wherein the actuating drive (10) has an electronic system, wherein the electronic system has at least one first electronic sub-system with a first power output stage (41), a first control unit (51) and a first rotor-position sensor arrangement (61) and a second electronic sub-system with a second power output stage (42), a second control unit (52) and a second rotor-position sensor arrangement (62), wherein the first electronic sub-system and the second electronic sub-system are together operatively connected to the stator (12) and the rotor (14),
**characterized in that**
the first electronic sub-system is arranged at least on a first circuit carrier plane (91) and a second circuit carrier plane (92) and the second electronic sub-system is arranged at least on the first circuit carrier plane (91) and a third circuit carrier plane (93), wherein the first, second and third circuit carrier planes (91, 92, 93) are arranged perpendicular to an axis of rotation (15) of the rotor (14) and spaced apart from one another along the axis of rotation (15), wherein the first power output stage (41), the second power output stage (42), the first rotor-position sensor arrangement (61) and the second rotor-position sensor arrangement (62) are arranged on the first circuit carrier plane (91), the first control unit (51) is arranged on the second circuit carrier plane (92) and the second control unit (52) is arranged on the third circuit carrier plane (93).

2. Electromechanical actuating drive (10) according to Claim 1, **characterized in that** the first control unit (51) and the second control unit (52) are arranged on mutually facing sides of the second circuit carrier plane (92) and the third circuit carrier plane (93).

3. Electromechanical actuating drive (10) according to either of Claims 1 and 2, **characterized in that** the first circuit carrier plane (91) is at a shorter distance from the rotor (14) than the other circuit carrier planes (92, 93) .

4. Electromechanical actuating drive (10) according to one of Claims 1 to 3, **characterized in that** the first electronic sub-system has a first voltage link (45) and the second electronic sub-system has a second voltage link (46), wherein the first voltage link (45) and the second voltage link (46) are arranged on the first circuit carrier plane (91), and wherein the first voltage link (45) has at least one first capacitor and the second voltage link (46) has at least one second capacitor.

5. Electromechanical actuating drive (10) according to one of Claims 1 to 4, **characterized in that** the first electronic sub-system has a first EMC assembly (81) and the second electrical sub-system has a second EMC assembly (82), which are arranged on a fourth circuit carrier plane (94), wherein the fourth circuit carrier plane (94) is arranged perpendicular to the axis of rotation (15) of the rotor (14) and spaced apart along the axis of rotation (15) from the first circuit carrier plane (91), the second circuit carrier plane (92) and the third circuit carrier plane (93).

6. Electromechanical actuating drive (10) according to one of Claims 1 to 5, **characterized in that** the first rotor-position sensor arrangement (61) has a first AMR sensor (64), a first Hall sensor (71) and a second Hall sensor (72) and the second rotor-position sensor arrangement (62) has a second AMR sensor (65), a third Hall sensor (73) and a fourth Hall sensor (74), wherein the first AMR sensor (64) and the second AMR sensor (65) are arranged on the first circuit carrier plane (91) so as to be central in relation to the axis of rotation (15) of the rotor (14), and wherein the first Hall sensor (71), the second Hall sensor (72), the third Hall sensor (73) and the fourth Hall sensor (74) are arranged on the first circuit carrier plane (91) so as to be concentric in relation to the axis of rotation (15) of the rotor (14), wherein the first Hall sensor (71) is arranged offset from the second Hall sensor (72) and the third Hall sensor (73) is arranged offset from the fourth Hall sensor (74) by an angle of 90° about the axis of rotation (15) of the rotor (14) .

7. Electromechanical actuating drive (10) according to Claim 6, **characterized in that** the first Hall sensor (71), the second Hall sensor (72), the third Hall sensor (73) and the fourth Hall sensor (74) are arranged on a side of the first circuit carrier plane (91) that is facing away from the rotor (14).

8. Electromechanical actuating drive (10) according to either of Claims 6 and 7, **characterized in that** the first AMR sensor (64) and the second AMR sensor (65) are arranged on a side of the first circuit carrier plane (91) that is facing towards the rotor (14).

9. Electromechanical actuating drive (10) according to either of Claims 6 and 7, **characterized in that** the first AMR sensor (64) and the second AMR sensor (65) are arranged on sides of the first circuit carrier plane (91) that are facing away from one another.

10. Electromechanical actuating drive (10) according to Claim 9, **characterized in that** the first circuit carrier plane (91) has a thickness (97) of between 0.8 mm and 1.6 mm in a region (96) on which the first rotor-position sensor arrangement (61) and the second rotor-position sensor arrangement (62) are arranged.

11. Electromechanical actuating drive (10) according to one of Claims 1 to 5, **characterized in that** the first rotor-position sensor arrangement (61) has a first TMR sensor (67) and the second rotor-position sensor arrangement (62) has a second TMR sensor (68), wherein the first TMR sensor (67) and the second TMR sensor (68) are arranged on the first circuit carrier plane (91) so as to be central in relation to the axis of rotation (15) of the rotor (14) .

12. Electromechanical actuating drive (10) according to one of Claims 1 to 11, **characterized in that** the first electronic sub-system and the second electronic sub-system are arranged in a common housing (100).

13. Electromechanical actuating drive (10) according to Claim 12, **characterized in that** the housing (100) has inward projections (105), which essentially separate at least the first control unit (51) and the second control unit (52) spatially from one another.

14. Electromechanical actuating drive (10) according to Claim 12 or 13, **characterized in that** the housing (100) is configured such that the first electronic sub-system and the second electronic sub-system are arranged in the housing (100) essentially spatially separated from one another.

## Revendications

1. Actionneur électromécanique (10) destiné à la direction par crémaillère, l'actionneur (10) comportant un stator (12) et un rotor (14), et l'actionneur (10) comportant un système électronique, le système électronique comportant au moins un premier sous-système électronique, pourvu d'un premier étage de sortie de puissance (41), d'une première unité de commande (51) et d'un premier ensemble de capteurs de position de rotor (61), et un deuxième sous-système électronique pourvu d'un deuxième étage de sortie de puissance (42), d'une deuxième unité de commande (52) et d'un deuxième ensemble de capteurs de position de rotor (62), le premier sous-système électronique et le deuxième sous-système électronique étant fonctionnellement reliés conjointement au stator (12) et au rotor (14),
**caractérisé en ce que**
le premier sous-système électronique est disposé au moins sur un premier niveau de support de circuit (91) et un deuxième niveau de support de circuit (92) et le deuxième sous-système électronique est disposé au moins sur le premier niveau de support de circuit (91) et un troisième niveau de support de circuit (93), les premier, deuxième et troisième niveaux de support de circuit (91, 92, 93) étant disposés perpendiculairement à un axe de rotation (15) du rotor (14) en étant espacés l'un de l'autre le long de l'axe de rotation (15), le premier étage de sortie de puissance (41), le deuxième étage de sortie de puissance (42), le premier ensemble de capteurs de position de rotor (61) et le deuxième ensemble de capteurs de position de rotor (62) étant disposés sur le premier niveau de support de circuit (91), la première unité de commande (51) étant disposée sur le deuxième niveau de support de circuit (92), et la deuxième unité de commande (52) étant disposée sur le troisième niveau de support de circuit (93) .

2. Actionneur électromécanique (10) selon la revendication 1, **caractérisé en ce que** la première unité de commande (51) et la deuxième unité de commande (52) sont disposées sur des côtés du deuxième niveau de support de circuit (92) et du troisième niveau de support de circuit (93) qui sont dirigés l'un vers l'autre.

3. Actionneur électromécanique (10) selon l'une des revendications 1 ou 2, **caractérisé en ce que** le premier niveau de support de circuit (91) est à une plus faible distance du rotor (14) que les autres niveaux de support de circuit (92, 93).

4. Actionneur électromécanique (10) selon l'une des revendications 1 à 3, **caractérisé en ce que** le premier sous-système électronique comporte un premier circuit à tension intermédiaire (45) et le deuxième sous-système électronique comporte un deuxième circuit à tension intermédiaire (46), le premier circuit de tension intermédiaire (45) et le deuxième circuit de tension intermédiaire (46) étant disposés sur le premier niveau de support de circuit (91), et le premier circuit de tension intermédiaire (45) comportant au moins un premier condensateur et le deuxième circuit de tension intermédiaire (46) comportant au moins un deuxième condensateur.

5. Actionneur électromécanique (10) selon l'une des revendications 1 à 4, **caractérisé en ce que** le premier sous-système électronique comporte un premier groupe de composants CEM (81) et le deuxième sous-système électrique comporte un deuxième groupe de composants CEM (82), lesquels groupes de composants CEM sont disposés sur un quatrième niveau de support de circuit (94), le quatrième niveau de support de circuit (94) étant disposé perpendiculairement à l'axe de rotation (15) du rotor (14) et le long de l'axe de rotation (15) à distance du premier niveau de support de circuit (91), du deuxième niveau de support de circuit (92) et du troisième niveau de support de circuit (93).

6. Actionneur électromécanique (10) selon l'une des revendications 1 à 5, **caractérisé en ce que** le premier ensemble de capteurs de position de rotor (61) comporte un premier capteur AMR (64), un premier capteur à effet Hall (71) et un deuxième capteur à effet Hall (72) et le deuxième ensemble de capteurs de position de rotor (62) comporte un deuxième capteur AMR (65), un troisième capteur à effet Hall (73) et un quatrième capteur à effet Hall (74), le premier capteur AMR (64) et le deuxième capteur AMR (65) étant disposés au centre par rapport à l'axe de rotation (15) du rotor (14) sur le premier niveau de support de circuit (91), et le premier capteur à effet Hall (71), le deuxième capteur à effet Hall (72), le troisième capteur à effet Hall (73) et le quatrième capteur à effet Hall (74) étant disposés concentriquement à l'axe de rotation (15) du rotor (14) sur le premier niveau de support de circuit (91), le premier capteur à effet Hall (71) étant décalé du deuxième capteur à effet Hall (72), et le troisième capteur à effet Hall (73) étant décalé du quatrième capteur à effet Hall (74), d'un angle de 90° autour de l'axe de rotation (15) du rotor (14).

7. Actionneur électromécanique (10) selon la revendication 6, **caractérisé en ce que** le premier capteur à effet Hall (71), le deuxième capteur à effet Hall (72), le troisième capteur à effet Hall (73) et le quatrième capteur à effet Hall (74) sont disposés sur un côté du premier niveau de support de circuit (91) qui est à l'opposé du rotor (14).

8. Actionneur électromécanique (10) selon l'une des revendications 6 ou 7, **caractérisé en ce que** le premier capteur AMR (64) et le deuxième capteur AMR (65) sont disposés sur un côté du premier niveau de support de circuit (91) qui est dirigé vers le rotor (14).

9. Actionneur électromécanique (10) selon l'une des revendications 6 ou 7, **caractérisé en ce que** le premier capteur AMR (64) et le deuxième capteur AMR (65) sont disposés sur des côtés du premier niveau de support de circuit (91) qui sont opposés l'un à l'autre.

10. Actionneur électromécanique (10) selon la revendication 9, **caractérisé en ce que** le premier plan de support de circuit (91) a une épaisseur (97) comprise entre 0,8 mm et 1,6 mm dans une région (96) sur laquelle le premier ensemble de capteurs de position de rotor (61) et le deuxième ensemble de capteurs de position de rotor (62) sont disposés.

11. Actionneur électromécanique (10) selon l'une des revendications 1 à 5, **caractérisé en ce que** le premier ensemble de capteurs de position de rotor (61) comporte un premier capteur TMR (67) et le deuxième ensemble de capteurs de position de rotor (62) comporte un deuxième capteur TMR (68), le premier capteur TMR (67) et le deuxième capteur TMR (68) étant disposés au centre par rapport à l'axe de rotation (15) du rotor (14) sur le premier plan de support de circuit (91).

12. Actionneur électromécanique (10) selon l'une des revendications 1 à 11, **caractérisé en ce que** le premier sous-système électronique et le deuxième sous-système électronique sont disposés dans un boîtier commun (100) .

13. Actionneur électromécanique (10) selon la revendication 12, **caractérisé en ce que** le boîtier (100) comporte des saillies (105) qui sont dirigées vers l'intérieur et qui séparent au moins la première unité de commande (51) et la deuxième unité de commande (52) sensiblement spatialement l'une de l'autre.

14. Actionneur électromécanique (10) selon la revendication 12 ou 13, **caractérisé en ce que** le boîtier (100) est conçu de manière à ce que le premier sous-système électronique et le deuxième sous-système électronique soient disposés dans le boîtier (100) en étant séparés sensiblement spatialement l'un de l'autre.
